# EUROPÄISCHE PATENTSCHRIFT

(11) **EP 1 063 404 B1**
(45) Veröffentlichungstag und Bekanntmachung des Hinweises auf die Patenterteilung: **06.08.2003**
(21) Anmeldenummer: 00108587.7
(22) Anmeldetag: 20.04.2000
(51) Int. Cl.: F02D 9/10

(54) **Drosselklappenstutzen für Brennkraftmaschinen**
Throttle body for internal combustion engine
Corps de papillon pour moteur à combustion interne

(30) Priorität: 22.06.1999 DE 19928473
(43) Veröffentlichungstag der Anmeldung: 27.12.2000
(73) Patentinhaber: Pierburg GmbH, 41460 Neuss (DE)
(72) Erfinder: Schröder, Thomas, 12589 Berlin (DE)

(56) Entgegenhaltungen:
- EP-B- 0 624 228
- DE-A- 4 429 956
- DE-A- 19 500 344
- FR-A- 2 663 710
- FR-A- 2 729 729
- US-A- 5 374 031

## Beschreibung

Die Erfindung betrifft einen Drosselklappenstutzen für eine Brennkraftmaschine nach dem Oberbegriff des Anspruchs 1.

Ein derartiger Drosselklappenstutzen ist beispielsweise aus der EP-B1-624228 bekannt. Diese Druckschrift beschreibt ein Verfahren zur Herstellung von Dosier- bzw. Zumeßwandungen in einem Ansaugkanal einer Drosselvorrichtung die auch bei einem kleinen Öffnungswinkel der Drosselklappe eine genaue Dosierung des Luftstroms im Saugkanal erreichen soll. Die Drosselklappe an sich ist dabei nicht zylindrisch, sondern angeschrägt mit elliptischen Klappenkonturen derart ausgeführt, daß die Umfangsfläche der Drosselklappe den Saugkanal in Schließstellung unter einem Anstellwinkel von α zwischen ca. 3 Grad bis ca. 15 Grad nahezu abschließt.

Das Positionieren der "elliptisch" angeschrägten (ovalen) Drosselklappe mit ihren jeweilig halbseitig versetzten elliptischen Klappenanlagenkanten auf der Drosselklappenwelle im kreisrunden Saugkanal in der Schließposition muß dabei von Hand ausgeführt werden, um einen gleichmäßig umlaufenden minimalen Leckluftringspalt zu erzielen. Schon ein geringes Verdrehen der Drosselklappe aus der optimalen Position heraus führt zwangsläufig zu einer weiteren Erhöhung des Luftdurchsatzes am Leerlaufanschlag, da eine notwendige Klappenanhebung (in Öffnungsrichtung) in diese Position größer ausfallen muß, um ein Verbeißen und Klemmen zu verhindern. Das von Hand justieren ist besonders kostenintensiv und macht ein automatisches Montieren des gesamten Drosselklappenstutzens unmöglich.

Hiervon ausgehend liegt der Erfindung die Aufgabe zugrunde, einen Drosselklappenstutzen zu verschaffen, der die oben genannten Nachteile nicht aufweist.

Diese Aufgabe wird durch die im kennzeichnenden Teil des Hauptanspruchs genannten Merkmale gelöst.

Dadurch, daß die Drosselklappe kreisrund, zylindrisch und plan ausgeführt ist und die Innenwandfläche des Saugkanals eine derartige elliptische Kontur aufweist, daß in Schließrichtung gesehen jeweils die erste Kante einer Drosselklappenhälfte (der Begriff Drosselklappenhälfte ist nicht so zu verstehen, daß die Drosselklappe aus zwei gesonderten Drosselklappen bestehen muß, er dient lediglich zur Beschreibung der Erfindung) der Drosselklappe an der Innenwandfläche des Saugkanals zur Anlage kommt, ist es möglich die Drosselklappe in einem automatischen Herstellungsverfahren auf der Drosselklappenwelle zu befestigen. Eine Justierung der Drosselklappen in einer besonderen Drehrichtung ist nicht mehr erforderlich.

Ein Ausführungsbeispiel der Erfindung ist in der Zeichnung dargestellt und wird nachfolgend beschrieben.

Hierbei zeigt:
Figur 1
   eine erste Ausführungsform des erfindungsgemäßen Drosselklappenstutzen in einer perspektivischen Ansicht;
Figur 2
   eine Draufsicht auf den erfindungsgemäßen Drosselklappenstutzen;
Figur 3
   eine erste Ausführungsform des erfindungsgemäßen Drosselklappenstutzens im Schnitt;
Figur 4
   eine zweite Ausführung des erfindungsgemäßen Drosselklappenstutzens im Schnitt.

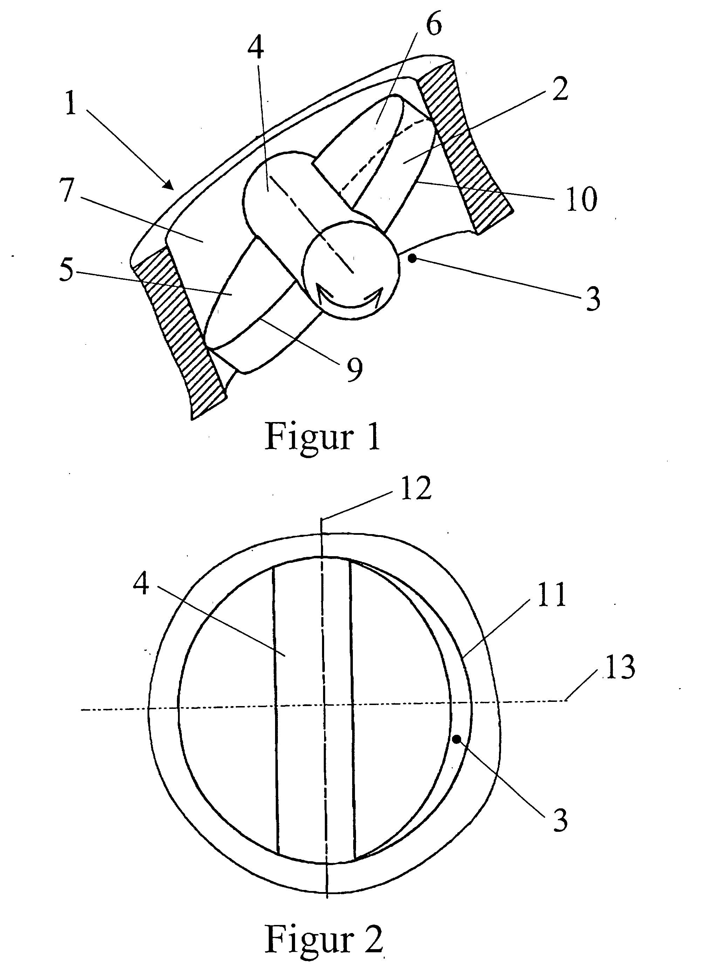

Figur 1 zeigt einen Drosselklappenstutzen 1 mit einer Drosselklappe 2, die mit einer in einem Saugkanal 3 gelagerten Drosselklappenwelle 4 verbunden ist. Zur Verdeutlichung werden zwei Drosselklappenhälften 5 und 6 definiert, die sich aus der zentrischen Anordnung der Drosselklappe 2 auf der Drosselklappenwelle 4 ergeben.

Die Drosselklappe 2 ist in Figur 1 sowie auch in den Figuren 2, 3 und 4 in Schließposition dargestellt. Durch die erfindungsgemäße Ausführung der Kontur der Innenwandfläche 7 kommen bei der Verwendung einer kreisrunden und planen Drosselklappe jeweils in Schließrichtung gesehen, die ersten Kanten 9, 10 der Drosselklappenhälften 5, 6 mit der Innenwandfläche 7 des Saugkanals 3 in Anlage.

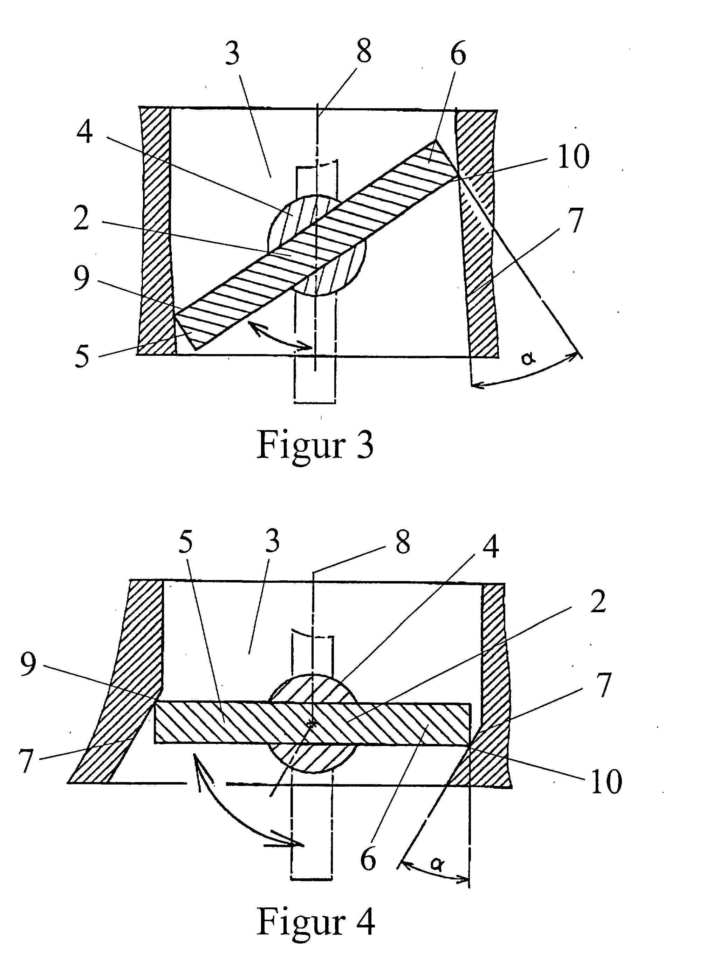

Diese Anlage erfolgt dabei (siehe Figur 3) unter einem bestimmten Anstellwinkel α in Bezug auf die Saugkanalneutrale 8. Diese Saugkanalneutrale 8 stellt eine Kurve dar, die sich aus der Aneinanderreihung aller Mittelpunkte einer kreisrunden Bearbeitung ergibt. Auf diese Weise liegt die Drosselklappe 2 derart an der Innenwandfläche 7 des Saugkanals 3 an, daß der Leckluftspalt minimiert werden kann. Im Gegensatz zu herkömmlichen Drosselklappen wird hierbei jedoch eine kreisrunde und plane Drosselklappe verwendet, was die Montage der Drosselklappe 2 im Drosselklappenstutzen 1 wesentlich vereinfacht, wobei gleichzeitig davon ausgegangen werden kann, daß die Drosselklappe optimal an die Innenwandfläche 7 anliegt, so daß ein automatisches Herstellungsverfahren angewendet werden kann. Ab einem bestimmten Minimalwinkel α ermöglicht die zylindrische kreisrunde Drosselklappe 2 in Schließposition mit ihren jeweiligen ersten Kanten 9, 10 an der Innenwandfläche 7 eine klemm- und verbeißfreie Anlage. Diese Anlageposition kann gleichzeitig als Leerlaufanschlag fungieren, ein Anheben (geringfügiges Öffnen) kann entfallen.

Figur 2 zeigt eine Draufsicht des Saugkanals 3 mit darin angeordneter Drosselklappe 2. Deutlich zu erkennen ist dabei, daß die Innenwandfläche 7 des Saugkanals 3 im Anlagebereich eine Ellipse 11 beschreibt, deren Hauptachse 12 in Drosselklappenwellenrichtung verläuft.

In der Schnittansicht gemäß Figur 3 ist deutlich die Anstellung der Drosselklappe 2 unter dem Winkel α im Bezug auf die Saugkanalneutrale 8 des Saugkanals 3 zu erkennen. Der Winkel α und damit die Anstellung der Drosselklappe zur Innenwandfläche 7 ist proportional zum Verhältnis der Hauptachse 12 zur Nebenachse 13 der Ellipse 11. Deutlich zu erkennen ist auch in dieser Figur die Anlage in Schließposition der jeweiligen ersten Kanten 9 und 10. Die in Saugrichtung verlaufende Saugkanalache 8 der Innenwandfläche 7 ist in diesem speziellen Fall eine Gerade, auf der der Mittelpunkt der Drosselklappe 2 liegt. Bei dieser ersten Ausführungsform des erfindungsgemäßen Drosselklappenstutzens 1 verläuft die Kontur der Innenwandfläche 7 des Saugkanals 3 in Saugrichtung parallel zur Lotrechten.

Eine zweite Ausführungsform des erfindungsgemäßen Drosselklappenstutzens 1 ist in Figur 4 dargestellt. Hierbei verläuft die Kontur der Innenwandfläche 7 in Saugrichtung unter dem Winkel α in Bezug auf die Lotrechte.

Die Bearbeitung des Saugkanals kann auf bekannte Weise durch eine Spindeloder Fräsbearbeitung erfolgen.

In bestimmten Anwendungsfällen kann es gewünscht sein, den Leckluftdurchsatz in der Leerlaufposition oder in der leerlaufnahen Position, also in der Schließposition oder in der schleißnahen Position der Drosselklappe noch weiter zu minimieren. Hierzu kann die Anlagefläche der Innenwandfläche durch plastische Verformung nach Energiezufuhr den jeweiligen ersten Kanten 9, 10 der Drosselklappenhälften 5, 6 angepaßt sein. Dabei kann die Drosselklappe durch Drehen der Welle mit vorgegebenen Drehmoment entgegen der Öffnungsrichtung "zum Eingraben" gebracht werden. Auch sind mechanische Druckelemente denkbar, die unmittelbar im Saugkanal auf die Drosselklappe wirken. Denkbar ist jedoch auch den Prozeß der plastischen Verformung durch Schwingungen, gezielte Wärme etc. zu unterstützen oder einzuleiten. Ein Verbeiß- und klemmfreier Leerlauf-Anschlag wird dann bereits durch ein geringfügiges Öffnen (Anheben) der Klappe um ungefähr 0,2 Grad erreicht. Vorteilhafterweise ist eine Minimierung des Luftdurchsatzes in einer leerlaufnahen Position nur durch eine anschließende bereits bekannte Schlauchzone möglich.

## Patentansprüche

1. Drosselklappenstutzen für eine Brennkraftmaschine mit einer Drosselklappe (2) die zentrisch mit einer in einem Saugkanal (3) gelagerten Drosselklappenwelle (2) verbunden ist, daß zwei Drosselklappenhälften (5,6) definiert sind, wobei die Drosselklappe (2) in Schließposition unter einem Winkel α in Bezug auf die Saugkanalneutrale Innenwandfläche (7) des Saugkanals (3) angestellt ist, **dadurch gekennzeichnet, daß** die Drosselklappe (2) kreisrund, zylindrisch und plan ausgeführt ist und die Innenwandfläche (7) des Saugkanals (3) eine derartige elliptische Kontur aufweist, daß in Schließrichtung gesehen jeweils die erste Kante (9, 10) einer Drosselklappenhälfte (5, 6) der Drosselklappe (2) an der Innenwandfläche (7) des Saugkanals (3) zur Anlage kommt.

2. Drosselklappenstutzen nach Anspruch 1, **dadurch gekennzeichnet, daß** im Anlagebereich der Drosselklappe (2) die Innenwandfläche (7) des Saugkanals (3) geschnitten mit einer Ebene die senkrecht zur Saugkanalneutrale (8) verläuft eine Ellipse (11) beschreibt, deren Hauptachse (12) in Drosselklappenwellenrichtung verläuft, derart, daß das Verhältnis von Hauptachse (12) zur Nebenachse (13) proportional zum Winkel α und damit zur Anstellung der Drosselklappe (2) ist.

3. Drosselklappenstutzen nach Anspruch 2, **dadurch gekennzeichnet, daß** im Anlagebereich der Drosselklappe (2) die in Saugrichtung verlaufende Saugkanalneutrale (8) eine Gerade ist, wobei der Mittelpunkt der Drosselklappe auf dieser Gerade liegt.

4. Drosselklappenstutzen nach Anspruch 3, **dadurch gekennzeichnet, daß** im Anlagebereich der Drosselklappe (2) die Innenwandkontur des Saugkanals (3) unter dem Winkel α in Bezug auf die Lotrechte verläuft.

5. Drosselklappenstutzen nach einem der vorhergehenden Ansprüche, **dadurch gekennzeichnet, daß** die Anlagefläche der Innenwand durch plastische Verformung nach Energiezufuhr den jeweiligen Unterkanten (9, 10) der Drosselklappenhälften (5, 6) angepaßt sind.

## Claims

1. Throttle-valve assembly for an internal combustion engine with a throttle valve (2) which is centrally connected to a throttle-valve shaft (2) mounted in an intake duct (3), that two throttle valve halves (5, 6) are defined, wherein the throttle valve (2) is set in the closed position at an angle α in relation to the intake duct neutral line inner wall surface (7) of the intake duct (3), **characterised in that** the throttle valve (2) is circular, cylindrical and plane and the inner wall surface (7) of the intake duct (3) has an elliptical contour which is such that, viewed in the closing direction, the first edge (9, 10) of a throttle-valve half (5, 6) of the throttle valve (2) in each case comes into contact with the inner wall surface (7) of the intake duct (3).

2. Throttle-valve assembly according to Claim 1, **characterised in that**, intersected by a plane extending perpendicularly to the intake duct neutral line (8), the inner wall surface (7) of the intake duct (3) describes in the contact region of the throttle valve (2) an ellipse (11) whose major axis (12) extends in the direction of the throttle-valve shaft such that the ratio of major axis (12) to secondary axis (13) is proportional to the angle α and thus to the setting of the throttle valve (2).

3. Throttle-valve assembly according to Claim 2, **characterised in that** in the contact region of the throttle valve (2) the intake duct neutral line (8) extending in the intake direction is a straight line, wherein the central point of the throttle valve lies on this straight line.

4. Throttle-valve assembly according to Claim 3, **characterised in that** the inner wall contour of the intake duct (3) extends at the angle α in relation to the horizontal in the contact region of the throttle valve (2).

5. Throttle-valve assembly according to any one of the preceding Claims, **characterised in that** the contact face of the inner wall is adapted to the respective lower edges (9, 10) of the throttle valve halves (5, 6) through plastic deformation following the input of energy.

## Revendications

1. Tubulure de papillon pour un moteur à combustion interne comportant un papillon (2), qui est relié de manière centrée à un arbre de papillon (4) supporté dans un canal d'aspiration 3, que deux moitiés de papillon (5, 6) sont définies, le papillon (2) en position fermée étant positionné sous un angle α par rapport à l'axe neutre de canal d'aspiration la surface intérieure de paroi (7) du canal d'aspiration (3), **caractérisée en ce que** le papillon (2) a une configuration circulaire, cylindrique et plane, et la surface de paroi intérieure (7) du canal d'aspiration (3) présente un contour elliptique tel que, vu dans le sens de fermeture, la première arête (9, 10) de chaque moitié de papillon (5, 6) du papillon (2) vient en appui sur la surface de paroi intérieure (7) du canal d'aspiration (3).

2. Tubulure de papillon selon la revendication 1, **caractérisée en ce que**, dans la zone d'appui du papillon (2), la surface de paroi intérieure (7) du canal d'aspiration (3), coupée par un plan qui s'étend perpendiculairement à l'axe neutre de canal d'aspiration (8), décrit une ellipse dont le grand axe 12 s'étend dans la direction de l'arbre de papillon, de manière telle que le rapport du grand axe (12) au petit axe (13) est proportionnel à l'angle α et ainsi à la position du papillon (2).

3. Tubulure de papillon selon la revendication 2, **caractérisée en ce que**, dans la zone d'appui du papillon (2), l'axe neutre de canal d'aspiration (8) est une droite s'étendant dans la direction d'aspiration sur laquelle est placé le centre du papillon.

4. Tubulure de papillon selon la revendication 3, **caractérisée en ce que** dans la zone d'appui du papillon (2) le contour de la paroi intérieure du canal d'aspiration (3) s'étend sous un angle α par rapport à la verticale.

5. Tubulure de papillon selon l'une des revendications précédentes, **caractérisée en ce que** la surface d'appui de la paroi intérieure est adaptée, par déformation plastique après apport d'énergie, aux arêtes inférieures (9, 10) respectives des moitiés de papillon (5, 6).
